# EUROPEAN PATENT SPECIFICATION

(11) **EP 0 800 658 B1**
(45) Date of publication and mention of the grant of the patent: **03.05.2000**
(21) Application number: 95941814.6
(22) Date of filing: 28.12.1995
(51) Int. Cl.: G02B 5/02, G03B 21/60

(54) **LIGHT DIFFUSING MATERIAL**
LICHTSTREUENDE MATERIALEN
MATERIAU DIFFUSANT LA LUMIERE

(30) Priority: 28.12.1994 GB 9426292; 04.01.1995 GB 9500025; 16.10.1995 GB 9521103
(43) Date of publication of application: 15.10.1997
(73) Proprietor: NASHUA CORPORATION, Nashua, NH 03061-2002 (US); NASHUA PHOTO LIMITED, Newton Abbot, Devon TG12 4PB (GB)
(72) Inventor: CLABBURN, Robin, Watchfield, Swindon, Wiltshire SN6 8TZ (GB)
(74) Representative: Howden, Christopher Andrew
(86) International application number: GB9503044
(87) International publication number: WO9620419

(56) References cited:
- EP-A- 0 294 122
- EP-A- 0 381 417
- EP-A- 0 464 499
- EP-A- 0 627 638
- JP-A- 59 143 618
- IBM TECHNICAL DISCLOSURE BULLETIN, vol. 29, no. 1, June 1986 NEW YORK, US, pages 276-279, ANONYMOUS 'Light Diffuser With Controlled Divergence'
- PATENT ABSTRACTS OF JAPAN vol. 016 no. 209 (P-1354) ,18 May 1992 & JP,A,04 037735 (MITSUBISHI RAYON CO LTD) 7 February 1992,

## Description

This invention relates to light diffusing sheet material such as may be used, for example, in front or rear projection screens.

A conventional rear projection or front projection screen has a completely symmetrical diffusion characteristic, that is to say, given uniform illumination of an element of the diffusing sheet material by a parallel beam striking the rear surface of such element, the intensity of the light directed, by the screen, from said element, along an axis inclined at an angle a to the normal to the element, measured in a plane perpendicular to the plane of that element will be the same whatever such perpendicular plane is selected. Thus, where a diffusing screen having a completely symmetrical diffusion characteristic is used as a rear projection screen lying in a substantially vertical plane and light is projected normally onto the diffusing screen, the light from the screen will be spread just as much horizontally as vertically. There are, however, instances in which it would be desirable for such a screen to have asymmetrical diffusion characteristics so that, for example, it would spread light from the screen horizontally to a substantial extent but would spread such light much less vertically. Such an arrangement might be used to ensure that each of a plurality of observers seated at different locations in a room and thus, in effect, distributed in a generally horizontal plane, would see the screen as being illuminated adequately whilst at the same time ensuring that light was not lost needlessly by scattering upwardly and downwardly towards the ceiling or floor of the room respectively.

In the following, reference is made to the "angle of view". In this specification, the term "angle of view" refers to the range of viewing angles of observers relative to such a front or rear projection screen over which the apparent brightness of a central area of the screen is within 50% or more of the apparent brightness to an observer viewing the screen at right angles.

European Patent No. 294122 discloses a display system including a projection screen comprising an integral sheet of a transparent photopolymer comprising an array of graded refractive index lenses, each of these lenses being formed by a respective region of the sheet extending between the surfaces of the sheet with the refractive index, in each said region, varying gradually with radial distance from the optical axis of the respective lens.

The photopolymer used may be that supplied by Du Pont under the Registered Trade Mark OMNIDEX and having the type designation HRF150 or HRF600. The monomer in the HRF series photopolymers is N-vinyl-carbazole (NVC) dispersed in a plasticized polyvinyl acetate (PVAC), cellulose acetate butyrate (CAB) or polyvinyl butyrate (PVB) as the polymeric binder. The material may be initiated either by photoinitiators or by a photosensitizing dye/initiator combination.

The OMNIDEX materials are available in sheet form, comprising a layer of the monomer on a polyester film base (MYLAR) the layer being entirely covered with a polyester (MYLAR) film.

Further photopolymerisable materials which may be used are set out in US Patent No. 3658526.

Normally a diffusion screen manufactured by the method disclosed in EP 294122 has a completely symmetrical diffusion characteristic.

Another form of known light diffusing sheet material is that disclosed in U.S. Patent No. 5307205 and which comprises a matrix of a first plastics material, for example, polymethylmethacrylate, in which is embedded a plurality of small, substantially spherical, particles of a second light transmitting plastics material, for example, alkyl acrylate resin or butyl acrylate resin, of a different refractive index, and which is of a rubbery consistency.

Japanese Patent Application No. 5-113606 describes a process for making reflective screens having anisotropic light diffusing properties by extruding through a die a liquid blend of phase incompatible resins thereby forming a film of one resin having light diffusing islands of the other resin embedded therein. Uniaxial drawing processing is said to convert these islands to ellipsoidal form with their major axes oriented in the drawing direction.

In EP-A-0627638, a material corresponding to that described above in relation to US-A-5307205 is rendered asymmetric in its diffusion characteristics by heating, stretching uniaxially and allowing to cool whilst maintained in a stretched condition, so that the individual particles of the second material are rendered elliptical with their major axes lying parallel.

In IBM Technical Disclosure Bulletin, Vol. 29, No. 1 of June 1986, p. 276-279 discloses diffusers comprising transparent sheets incorporating a plurality of graded refractive index lenses, formed by the ion diffusion method, fabricated by lithographic techniques. In some of these diffusers, the microlenses, as viewed along a normal to the sheet, are long and narrow and are aligned with their major axes parallel with one another, in the plane of the sheet, to produce a diffuser having an asymmetric diffusion pattern.

It is an object of the invention to provide an improved method of changing the optical characteristics of a light diffusing material.

According to one aspect of the invention there is provided a method of producing a light diffusing sheet material comprising providing a composite plastics sheet comprising a plurality of polymeric particles of a first refractive index embedded in a matrix of a polymeric transparent cross-linkable plastics material of a second different refractive index and stretching the material in the plane of the sheet material, whilst the material is at a temperature at which it is readily deformable, and subsequently allowing the material to cool in its stretched condition, characterised by cross-linking the matrix material before stretching it.

According to another aspect of the invention, there is provided a method of producing a light-diffusing sheet material comprising providing a photopolymerised sheet material incorporating an array of graded refractive index microlenses, cross-linking the material, heating said sheet material to a temperature at which it becomes readily elastically deformable and stretching the material in the plane of the sheet material, and allowing the material to cool in its stretched condition.

A material in accordance with either of the above aspects may be stretched uniaxially to provide a light diffusing material having asymmetric light diffusing properties.

The method of the invention may be applied to light diffusing sheet materials such as the graded refractive index lens screen material described in European Patent No. 294122, or to a light diffusing sheet material, such as disclosed in W091/18304, which comprises graded refractive index screen material in which at least one surface of the sheet material has a contouring or relief corresponding to the refractive index gradations, for example comprising a respective convex dome or concave dimple for each graded refractive index lens, aligned with and adding its optical effect to the respective graded refractive index lens. The method is also applicable to a variant of the last-mentioned material in which each surface relief lens is substantially larger in diameter than the graded refractive index lenses and spans a plurality of these.

The method of the invention may also be applied to light diffusing sheet materials of the kind disclosed in US Patent No. 5307205. As described in EP-A-0627638, a sample of such sheet material, having initially symmetric diffusion characteristics, can be converted into a material having asymmetric diffusion characteristics by heating the material to a temperature at which it is slightly softened, stretching the material along an axis within the plane of the material, and allowing the material to cool in its stretched condition. It is believed that, in this instance, the asymmetry is the result of a distortion of the individual (initially spherical) particles, and/or from the microspheres adjacent the surface of the material distorting that surface during stretching, providing an asymmetric surface relief effect, for example forming a respective asymmetric dome above each such particle adjacent said surface. It has been found that the cross-linking of the material, prior to stretching, allows a predetermined degree of asymmetry to be obtained more easily than would otherwise be possible.

The invention also provides a light diffusing polymer film as defined in claim 3 and a light diffusing photopolymerised sheet material as defined in claim 11.

In the various embodiments of this invention utilising uni-axial stretching, it is believed that the effect of the stretching is to elongate each of the microlenses, along the direction of stretching, and thus perpendicular to its optical axis so that each lens is rendered astigmatic.

### Brief Description of Figures

Figure 1 is a typical graph of modulus of elasticity against temperature for a typical cross-linked plastics material and a corresponding non-cross-linked plastics material.

Figure 2 is a graph of stress versus strain for the same cross-linked and a corresponding non-cross-linked plastics material at room temperature.

Figure 3 is a graph of stress versus strain for the same cross-linked and non-cross-linked materials at a temperature close to melting point of the non-cross-linked material.

Figure 4 is a typical graph of stress versus strain for two cross-linked counterparts to the same un-cross-linked material with different cross-linked densities, at a temperature above the melting point of the corresponding un-cross-linked material.

Examples of the use of methods embodying the invention to produce light diffusing material having asymmetric diffusing characteristics are described below.

### EXAMPLE 1

A light-diffusing photopolymerised sheet material was produced as described in European Patent Specification No. 294122, and thus incorporated an array of graded refractive index microlenses. This light diffusing material had symmetrical light diffusion characteristics and an angle of view of 46°. The starting photopolymerisable material for this light diffusing material was the DuPont MRF600 material referred to above, having a thickness of 93 microns. A sample strip of this light diffusing material 45 mm in width (and stripped from its Mylar backing) was heated to 130°C, at which temperature the material became slightly softened, then stretched longitudinally to a ratio of 2:1 (i.e. was stretched to twice its original length) and then cooled in its stretched condition so that the stretch remained permanent. After stretching the width of the strip had reduced to 25 mm. The diffusion characteristics of the stretched strip were found to be asymmetrical, having an angle of view of 37° in a plane parallel with the longitudinal direction of the strip and an angle of view of 47° in a plane perpendicular to the direction of the strip.

An example of the method applied to a light diffusing material of the type disclosed in US Patent No. 5307205 is set out below.

### EXAMPLE 2

Light diffusing film DFA12 provided by the 3M Company, having a viewing angle of 20° (50% of peak brightness) was stretched at 80°C, causing a reduction in thickness of about 20% (from 0.0065 in to 0.0055 in), cooled to room temperature and the view angle re-measured. After orientation, the angles of view were 26° in the direction of orientation and 22° in the perpendicular direction, thus demonstrating that asymmetry had been created and the angle of view changed.

### EXAMPLE 3

The table below sets out the results obtained by applying the method of Example 2 to further light diffusing sheet plastics materials, supplied by Marshall & Williams Corporation under the designations MW11, MW13, MW2, MW3 and MW6, the stretching temperatures, stretch ratios and final sheet thickness being as indicated in the columns heated "S Temp.", "S Ratio" and "FT" respectively. The initial thickness of the sheet material in each case was 20 thousandths of an inch (500 µM). The headings "A of V (vert)" and "A of V (hor)" refer to the angles of view (as hereinbefore defined) respectively in a longitudinal plane parallel with the stretch direction and in a plane perpendicular to the stretch direction. The heading "Gain" refers to the ratio of the apparent brightness of the screen, illuminated normally, when viewed normally, to the average apparent brightness (averaged over a full solid angle of 180°). Temperatures in the table are in °F and thicknesses in thousandths of an inch (1 inch = 25,4 mm). Angles of view are in degrees.

**TABLE**

| Material | S.Temp | S.Ratio | AofV (hor) | AofV (vert) | Gain | FT |
|---|---|---|---|---|---|---|
| MW11 | 215 | 2.00 | 35 | 17.5 | 11.09 | 13.5 |
| MW13 | 225 | 2.00 | 37 | 19 | 11.70 | 14.5 |
| MW2 | 215 | 1.25 | 34.5 | 25 | 8.39 | 17.5 |
| MW3 | 215 | 1.58 | 31 | 19.5 | 12.05 | 14 |
| MW6 | 220 | 1.71 | 29.5 | 19 | 12.98 | 13.5 |

It will be understood that whereas, in the above, reference is made to "stretching" the material, such "stretching" need not be produced by pulling the material.

In some embodiments in which a matrix of one refractive index has particles of different refractive index embedded therein, said particles embedded in the matrix may be rigid at room temperature but may soften, so as to be deformable or stretchable at the temperature to which the matrix material is heated for stretching or otherwise orienting.

In the context of this invention, the most appropriate method of deformation of the light diffusing sheet material will be chosen based on the starting material, and the change in character required, that is whether it is desired to create asymmetric optical characteristics, whether it is desired to change the angle of view, or a combination of these two. For example, orientation in a single direction will create asymmetry. Orientation in two directions may or may not create asymmetry dependant on the degree of orientation but will change view angle. In heterogeneous materials such as those described in USP 5307205 where optical properties are achieved by mixing two or more materials, the effects of orientation will, to an extent, be determined by the separate physical characteristics of these materials. This is best understood by considering relatively hard particles contained in an originally smooth surfaced sheet. As stretching takes place, these particles will increasingly modify the surface of the sheet. It will be understood that if the particles are originally spherical, convex "bumps" will be created on the surface of the sheet, forming surface relief lenses. It will be understood that by the correct choice of material and process temperature, the relative physical properties of the component materials in mixed systems can be chosen to enable specific surface relief and/or asymmetry characteristics to be achieved.

The invention utilises cross-linked thermoplastics. Cross-linking of thermoplastics materials is now a relatively well known technology, pioneered in the 50s by Charlesby and commercialised in the late 50s and 60s by Raychem and W.R. Grace. When thermoplastics are cross-linked, they no longer melt when heated but exhibit elastic or elastomeric characteristics above the melting point of the corresponding un-cross-linked plastics. If heated to above the melting point of the corresponding un-cross-linked plastics, stretched, then cooled, cross-linked thermoplastics will retain their stretched configuration until reheated, when they will return, generally completely, to their original dimensions.

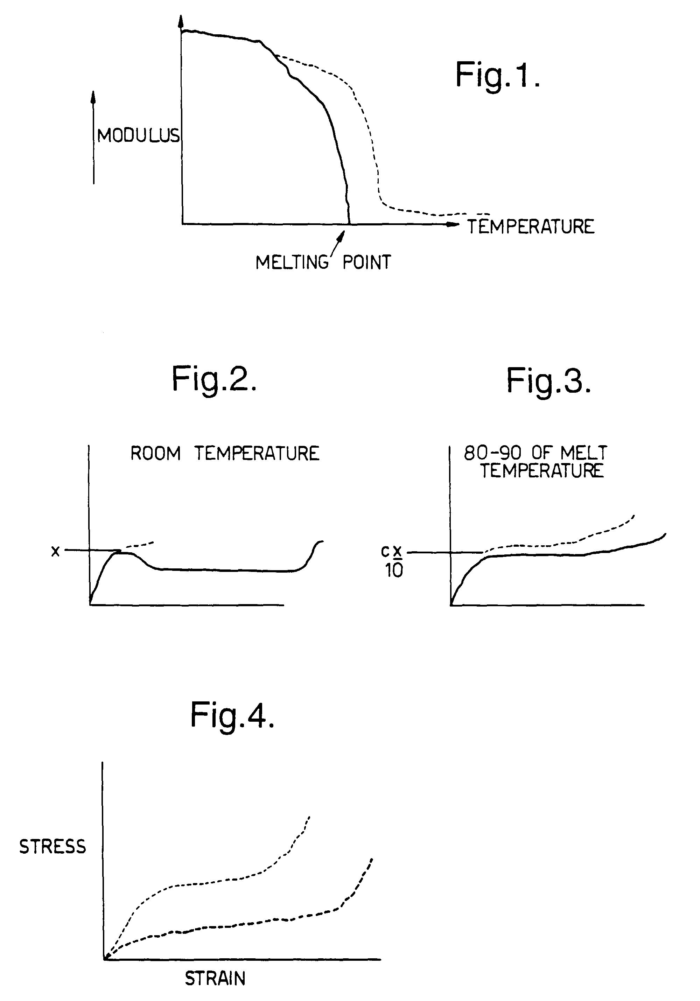

Figures 1 to 3 illustrate the modification of the physical properties of a thermoplastics material (polyethylene in the example illustrated) by cross-linking. In these Figures, the graphs relating to the un-cross-linked material are in solid lines and the graphs relating to the cross-linked material are in dotted lines.

Figure 1 shows by way of example of a graph of modulus of elasticity against temperature for both crosslinked and non-crosslinked versions of essentially the same material; in this instance, certain types of polyethylene. Different thermoplastics may have significantly different overall properties but the effects of crosslinking are generally similar.

Figure 2 is a graph of stress versus strain for both materials of Figure 1 at room temperature, Figure 3 is a corresponding graph showing respective curves for the cross-linked and non-cross-linked material at a temperature close to melting point of the non-cross-linked material, whilst Figure 4 is a graph corresponding to Figure 3 for two cross-linked counterparts to the un-cross-linked material of the other graphs, with different cross-link densities, at a temperature above the melting point of the corresponding un-cross-linked material. Cross-linking thus provides considerable flexibility in the orientation of polymer materials, and in the case of materials otherwise as described above, makes it easier to obtain a predetermined degree of asymmetry.

Non-crosslinked materials, when orientated at elevated temperatures by any of the techniques disclosed above, must be cooled during stretching simply to ensure that the thinning areas (which cool more quickly) build up mechanical strength, thus ensuring that the thicker (hotter) areas become appropriately stretched. This principle is utilised in the "blown film" process most commonly used for making plastic bags. A given thermoplastic material will have an optimum (maximum) degree of orientation. Levels below the optimum are very difficult to obtain by heating and stretching, specifically, if a "uniform" product is required. In some instances, the only effective approach is to use a "nip roll" process in which material is compressed to induce thickness reduction and thus orientation.

Similar constraints do not exist with cross-linked thermoplastics and a simple stretching process at high temperature can achieve a range of orientation levels within the elongation capabilities of the material.

Cross-linking may be achieved by several techniques, the more common are high energy radiation, e.g. by electron beams or X rays, UV radiation or by chemical treatments, for example using peroxides.

The degree of cross-linking can be readily controlled and, in embodiments comprising particles of one refractive index embedded in a matrix of a different refractive index, this can be true of both the host polymer and the material of the embedded particles.

Since both temperature and cross-link density affect the elastic modulus of the polymer structure on a microscopic level, it becomes clear that cross-linked thermoplastics materials can provide great flexibility in the creation of asymmetric diffusers of the type outlined above.

Controlled cross-linking of the substrate will eliminate the need for melting or near-melting of the material prior to stretching and provide much greater flexibility in the choice of stretching temperature. Controlled cross-linking also eliminates the need for cooling during stretching.

Whilst the description above in relation to cross-linking has been directed to a material comprising a matrix of one plastics material incorporating particles of another material of different refractive index, a similar cross-linking technique can be applied to the photopolymer-based graded refractive index screen material referred to above in Example 1. It is true that the photopolymer based graded refractive index material described with reference to Example 1 above may already be cross-linked to some extent as a result of the selective UV exposure utilised to produce the graded refractive index lenses or other graded refractive index features. However, as a means of optimising the orientation process, further cross-linking may be deliberately induced. Where, as is the case with the preferred photopolymerisable material, the material incorporates cross-linkable components such as PVA any such component of the photopolymer and indeed any unreacted monomer could be further polymerised, for example, using electron beam irradiation, which could change the orientation and asymmetry characteristics of the material but without significantly affecting the fundamental diffusion characteristics such as angle of view.

Depending on the application, the techniques described may be used to create asymmetry, modify the angle of view or both. Using this technique it is clearly possible to change the optical characteristic in a single sheet of material and indeed vary the properties within that sheet. For example, vacuum forming a flat sheet of the material into a simple (hemisphere) or more complex shape will give a variety of orientations and thus view angle differences within a single piece.

With some diffusing materials, stretching the material actually appears to reduce rather than increase the angle of view. This effect, also, is considered to be within the scope of the invention.

It will be understood that any of the diffusing materials referred to above may be used as a rear projection screen (i.e. as a diffusing transmission screen) or may be laminated with a reflective layer to form a reflective or front projection screen. The reflective layer may be applied after stretching, where the reflective layer is non-stretchable, or before stretching if the reflective layer is stretchable without detriment to its reflective properties.

Methods for applying reflective layers on screen materials are well known, and do not form a part of this invention. Generally, reflective screens of the present invention can be produced by depositing or laminating a layer of reflective material on one surface of the screen. For example a reflective screen can be made by laminating the screen material with reflective MYLAR or with a metallised film. Reflective screens also can be made by direct metallisation of the screen material using well established techniques.

It is possible to incorporate further properties in a light diffusing screen in accordance with the invention by means known *per se.* For example, such a screen may incorporate a reflection reducing coating or coatings, or may have additives or treatment to render the screen birefringent or polarising.

As noted above whilst, in many embodiments of the invention, the plastics material is heated in order to soften it for stretching, heating is not invariably essential. Where the material is heated, the optimum temperature to which the material may be heated depends upon the material concerned and also upon the technique used for stretching or orienting the material. In general, where the material is heated, the temperature to which it is heated will be in the range 70°C to 150°C. For acrylics or acrylic-based materials, the temperature used may typically be in the region 100°C to 120°C.

As also noted above "stretching" or orienting the plastics sheet material, in carrying out the present invention, may be carried out in any of a variety of ways.

Basically there are two types of orientation process; those in which the material is compressed; the second in which the material is stretched mechanically or using air pressure (or lack thereof) in one or more directions.

Typically in a compression process a sheet of material is run through the nip of the two-roll or multi-roll stack. The nip separation is less than the initial thickness of the material. In the process the thickness is reduced and the length increased. The increase in width is small, but it will increase with the increase in temperature. For best results a temperature difference is established between the roll stack and the material as it enters the roll stack. If more than one pair of cooperating rolls is used there will typically be a change in temperature of the material from one pair of rolls to the next (and successive pairs of rolls may be maintained at different temperatures).

Stretching may be uniaxial and biaxial. Stretching may be achieved by processes corresponding to known blow moulding and vacuum forming processes or by a process corresponding to the blown-film method used for making (for example) polyethylene film. These methods all involve cooling during the stretching part of the process.

However, the currently preferred method, particularly where the starting material is either sheet or roll stock, uses an apparatus which has three heating zones; namely a preheating zone where the material is heated before any significant deformation takes place; a subsequent stretching zone, where the material may also be heated; and, optionally, a subsequent annealing zone. Provided that stretching is complete in the stretching zone, annealing may in fact impair performance. In this process material can be stretched longitudinally, laterally or in both directions. Longitudinal stretching is achieved by using differential roll speeds within the machine. Lateral stretching is achieved by gripping the sides of the material at discrete points then moving the grippers apart. The grippers may, for example, run in diverging rails and be drawn by chains along these rails whereby the material is stretched laterally as it is conveyed longitudinally. In this apparatus the stretching is purely lateral. Rail separation and rate of separation can be varied.

## Claims

1. A method of producing a light diffusing sheet material comprising providing a composite plastics sheet comprising a plurality of polymeric particles of a first refractive index embedded in a matrix of a polymeric transparent cross-linkable plastics material of a second different refractive index and stretching the material in the plane of the sheet material, whilst the material is at a temperature at which it is readily deformable, and subsequently allowing the material to cool in its stretched condition, characterised by cross-linking the matrix material before stretching it.

2. A method according to claim 1, of producing a light diffusing sheet material having asymmetric light diffusing properties, wherein the material, in said stretching step, is stretched preferentially along a predetermined direction in a plane of the sheet material.

3. A light diffusing polymer film which comprises a matrix of a first transparent polymer in which is embedded a plurality of particles of a second transparent plastics polymer of a different refractive index from the first polymer, and wherein said particles are elongate relative to a spherical form along a direction in the plane of said film, which is substantially the same for all of said particles, whereby the film has asymmetric light diffusing properties, characterised in that said polymer matrix is a stretched cross-linked polymer matrix.

4. A polymer film according to claim 3 wherein at least one surface of the polymer film has an array of bumps or domes forming microlenses, each said bump or dome overlying a respective said particle.

5. A film according to claim 4, wherein said bumps or domes are elongated in said direction in the plane of the film.

6. A projection screen comprising a film according to any of claims 3 to 5 having a reflective backing.

7. A method of producing a light-diffusing sheet material comprising providing a photopolymerised sheet material incorporating an array of graded refractive index microlenses, cross-linking the material, heating said sheet material to a temperature at which it becomes readily elastically deformable and stretching the material in the plane of the sheet material, and allowing the material to cool in its stretched condition.

8. A method according to claim 7 wherein the material is stretched uni-axially, whereby the stretched and cooled material has asymmetric light-diffusing properties.

9. A method according to claim 1 or claim 7 wherein the material is stretched bi-axially.

10. A method according to claim 9 wherein said bi-axial stretching is carried out so as to produce asymmetry of diffusion characteristics, dependent upon the degree of orientation.

11. An asymmetrically light-diffusing photopolymerised sheet material incorporating an array of graded refractive index microlenses which are elongate along an axis in the plane of the sheet material, and wherein said sheet material is a stretched cross-linked material.

## Patentansprüche

1. Verfahren zur Herstellung eines lichtstreuenden Folienmaterials, welches das Bereitstellen einer Kunststoffverbundfolie, die eine Vielzahl polymerer Teilchen mit einem ersten Brechungsindex umfaßt, die in einer Matrix aus einem polymeren durchsichtigen vernetzbaren Kunststoffinaterial mit einem zweiten unterschiedlichen Brechungsindex eingebettet sind, und das Strecken des Materials in der Ebene des Folienmaterials, während das Material sich bei einer Temperatur befindet, bei der es leicht verformbar ist, und das anschließende Abkühlenlassen des Materials in seinem gestreckten Zustand umfaßt, gekennzeichnet durch Vernetzen des Matrixmaterials, bevor es gestreckt wird.

2. Verfahren nach Anspruch 1, zur Herstellung eines lichtstreuenden Folienmaterials mit asymmetrischen Lichtstreuungseigenschaften, wobei das Material, in besagtem Streckschritt, vorzugsweise entlang einer vorbestimmten Richtung in einer Ebene des Folienmaterials gestreckt wird.

3. Lichtstreuender Polymerfilm, der eine Matrix aus einem ersten durchsichtigen Polymer umfaßt, in die eine Vielzahl von Teilchen aus einem zweiten durchsichtigen Kunststoffpolymer mit einem vom ersten Polymer unterschiedlichen Brechungsindex eingebettet ist, und wobei besagte Teilchen relativ zu einer sphärischen Form entlang einer Richtung in der Ebene besagten Films längsgestreckt sind, die im wesentlichen die gleiche für alle besagten Teilchen ist, wodurch der Film asymmetrische Lichtstreuungseigenschaften besitzt, dadurch gekennzeichnet, daß besagte Polymermatrix eine gestreckte vernetzte Polymermatrix ist.

4. Polymerfilm nach Anspruch 3, dadurch gekennzeichnet, daß wenigstens eine Oberfläche des Polymerfilms eine Anordnung von Höckern oder Wölbungen besitzt, die Mikrolinsen bilden, wobei jeder besagte Höcker oder Wölbung über einem entsprechenden besagten Teilchen liegt.

5. Film nach Anspruch 4, dadurch gekennzeichnet, daß besagte Höcker oder Wölbungen in besagter Richtung in der Ebene des Films längsgestreckt sind.

6. Projektionsschirm, welcher einen Film gemäß einem der Ansprüche 3 bis 5 umfaßt, mit einer reflektierenden Rückschicht.

7. Verfahren zur Herstellung eines lichtstreuenden Folienmaterials, welches das Bereitstellen eines photopolymerisierten Folienmaterials, das eine Anordnung von Mikrolinsen mit abgestuftem Brechungsindex einschließt, das Vernetzen des Materials, das Erhitzen besagten Folienmaterials auf eine Temperatur, bei der es leicht elastisch verformbar wird, und das Strecken des Materials in der Ebene des Folienmaterials und Abkühlenlassen des Materials in seinem gestreckten Zustand umfaßt.

8. Verfahren nach Anspruch 7, dadurch gekennzeichnet, daß das Material uniaxial gestreckt wird, wodurch das gestreckte und abgekühlte Material asymmetrische Lichtstreuungseigenschaften besitzt.

9. Verfahren nach Anspruch 1 oder Anspruch 7, dadurch gekennzeichnet, daß das Material biaxial gestreckt wird.

10. Verfahren nach Anspruch 9, dadurch gekennzeichnet, daß besagte biaxiale Streckung so durchgeführt wird, daß Asymmetrie von Streuungseigenschaften erzeugt wird, in Abhängigkeit vom Orientierungsgrad.

11. Asymmetrisch lichtstreuendes photopolymerisiertes Folienmaterial, das eine Anordnung von Mikrolinsen mit abgestuftem Brechungsindex einschließt, die entlang einer Achse in der Ebene des Folienmaterials längsgestreckt sind, und wobei besagtes Folienmaterial ein gestrecktes vemetztes Material ist.

## Revendications

1. Procédé de production d'un matériau en feuilles diffusant la lumière comprenant les étapes consistant à fournir une feuille en matière plastique composite comprenant une pluralité de particules polymères possédant un premier indice de réfraction enrobées dans une matrice d'une matière plastique polymère réticulable transparente possédant un second indice de réfraction différent et à étirer le matériau dans le plan du matériau en feuilles, alors que le matériau est à une température à laquelle il est facilement déformable, et permettre ultérieurement au matériau de refroidir à son état étiré, caractérisé par la réticulation du matériau matriciel avant son étirement.

2. Procédé selon la revendication 1 de production d'un matériau en feuilles diffusant la lumière comportant des propriétés de diffusion de lumière asymétrique, dans lequel le matériau, dans ladite étape d'étirement, est étiré de préférence le long d'une direction prédéterminée dans un plan du matériau en feuilles.

3. Film polymère diffusant la lumière qui comprend une matrice d'un premier polymère transparent dans lequel est enrobée une pluralité de particules d'un second polymère en matière plastique transparent possédant un indice de réfraction différent de celui du premier polymère, et dans lequel lesdites particules sont de forme allongée par rapport à une forme sphérique le long d'une direction dans le plan dudit film, lequel est sensiblement le même pour la totalité desdites particules, d'où il résulte que le film possède des propriétés de diffusion de la lumière asymétrique, caractérisé en ce que ladite matrice polymère est une matrice polymère réticulée étirée.

4. Film polymère selon la revendication 3 dans lequel au moins une surface du film polymère comporte un réseau de bosses ou de dômes formant des micro lentilles, chacune desdites bosses ou dômes recouvrant une dite particule respective.

5. Film selon la revendication 4, dans lequel lesdites bosses ou lesdits dômes sont de forme allongée dans ladite direction dans le plan du film.

6. Écran de projection comprenant un film selon l'une des revendications 3 à 5 ayant une doublure réfléchissante,

7. Procédé de production d'un matériau en feuilles diffusant la lumière comprenant les étapes consistant à fournir un matériau en feuilles photopolymérisé incorporant un réseau de micro lentilles à gradient d'indice de réfraction, à réticuler le matériau, à chauffer ledit matériau en feuilles à une température à laquelle il devient facilement élastiquement déformable et à étirer le matériau dans le plan du matériau en feuilles, et à permettre au matériau de refroidir dans son état étiré.

8. Procédé selon la revendication 7, dans lequel le matériau est étiré selon un seul axe, d'où il résulte que le matériau étiré et refroidi possède des propriétés de diffusion de lumière asymétrique.

9. Procédé selon la revendication 1 ou la revendication 7, dans lequel le matériau est étiré biaxialement.

10. Procédé selon la revendication 9, dans lequel ledit étirement biaxial est réalisé de façon à produire l'asymétrie des caractéristiques de diffusion, en fonction du degré de l'orientation.

11. Matériau en feuilles photopolymérisé diffusant la lumière de manière asymétrique incorporant un réseau de micro lentilles à gradient d'indice de réfraction qui sont de forme allongée le long d'un axe dans le plan du matériau en feuilles, et dans lequel ledit matériau en feuilles est un matériau étiré et réticulé.
